# EUROPÄISCHE PATENTSCHRIFT

(11) **EP 3 837 127 B1**
(45) Veröffentlichungstag und Bekanntmachung des Hinweises auf die Patenterteilung: **27.04.2022**
(21) Anmeldenummer: 19742141.5
(22) Anmeldetag: 10.07.2019
(51) Int. Cl.: B60K 1/00

(54) **ANTREIBBARE ACHSE FÜR EIN FAHRZEUG**
DRIVABLE AXLE FOR A VEHICLE
ESSIEU MOTEUR POUR VÉHICULE

(30) Priorität: 14.08.2018 DE 102018213651
(43) Veröffentlichungstag der Anmeldung: 23.06.2021
(73) Patentinhaber: ZF Friedrichshafen AG, 88046 Friedrichshafen (DE)
(72) Erfinder: KONTERMANN, Peter, 49090 Osnabrück (DE); BÄUMER, Benjamin, 49479 Ibbenbüren (DE)
(74) Vertreter: ZF Friedrichshafen AG
(86) Internationale Anmeldenummer: PCT/EP2019/068469
(87) Internationale Veröffentlichungsnummer: WO 2020/035227

(56) Entgegenhaltungen:
- CN-U- 201 613 819
- DE-A1- 10 350 862
- DE-A1-102014 205 135
- DE-U1-202010 001 318

## Beschreibung

Die Erfindung betrifft eine antreibbare Achse für ein Fahrzeug, insbesondere eine Starrachse.

Die Erfindung betrifft weiter eine Antriebseinrichtung für ein Fahrzeug.

Obwohl die vorliegende Erfindung allgemein auf beliebige Achsen anwendbar ist, wird die vorliegende Erfindung in Bezug auf eine Starrachse erläutert.

Insbesondere Pickups und Geländefahrzeuge, aber auch große und kleine Transporter weisen auch heutzutage häufig eine angetriebene Starrachse an der Hinterachse auf. Dabei sind beide Räder starr über einen Achskörper der Starrachse miteinander verbunden. Weiterhin ist es bekannt geworden in die Starrachsen einen Teil des Antriebsstrangs zu integrieren, unter anderem ein Differential und Antriebswellen.

Aus der DE 10 2013 217 590 A1 ist eine antreibbare Achse für ein Kraftfahrzeug bekannt geworden, wobei die Achse ein Differentialgetriebe, wenigstens ein Getriebelager, wenigstens ein Achsrohr und wenigstens eine Achswelle aufweist, wobei das Differentialgetriebe ein von dem wenigstens einen Achsrohr gesondertes Volumen für Schmiermittel aufweist. Dabei ist das Differentialgetriebe zu dem wenigstens einen Achsrohr mithilfe einer Spaltdichtung abgedichtet.

Nachteilig dabei ist, dass der Antriebsstrang derartiger Fahrzeuge mit Starrachse insgesamt sehr viel Bauraum von der Fahrzeugfront bis zum -heck benötigen. Der Antriebsstrang besteht in der Regel aus einem Verbrennungsmotor mit angeflanschtem Getriebe im Vorderwagen und der Starrachse im Heck mit einem Hinterachsgetriebe/Differential, die über eine Kardanwelle miteinander verbunden sind. Letztere erstreckt sich vom Vorderwagen bis hin zum Hinterachsgetriebe entlang der Fahrzeuglängsachse.

Aus DE 10 2014 205 135 A1 ist eine antreibbare Starrachse für ein Fahrzeug bekannt.

Die Achse weist einen einteiligen Achskörper auf, der sich als tragender Körper von einem Außenabschnitt 17 über einen fahrzeugmittigen Zwischenabschnitt 19 bis zu einem Außenabschnitt 18 erstreckt. Im Bereich des Zwischenabschnitts weist der Achskörper einen wesentlich größeren Querschnitt auf und bildet ein Gehäuse zur Aufnahme eines Elektromotors, eines Übersetzungsgetriebes, eines Übertragungsgetriebes, eines Differentials.

Eine Aufgabe der vorliegenden Erfindung ist es daher, eine antreibbare Achse bereitzustellen, welche den Bauraum für den Antrieb eines Fahrzeugs insgesamt senkt, einfach zu integrieren und herzustellen sowie kostengünstig ist. Eine weitere Aufgabe der vorliegenden Erfindung ist es, eine alternative antreibbare Achse bereitzustellen.

Die vorliegende Erfindung löst die genannten Aufgaben bei einer antreibbaren Achse für ein Kraftfahrzeug, insbesondere eine Starrachse, umfassend einen Achskörper, ausgebildet zur Aufnahme einer Achswelle und eine Aufnahmestruktur zur Aufnahme eines Fahrzeugelements zur Einbindung in einen Antriebsstrang, wobei die Aufnahmestruktur mit dem Achskörper verbunden ist, wobei die Aufnahmestruktur zur Aufnahme einer Antriebseinheit des Fahrzeugs ausgebildet ist und Öffnungen zum Anschluss an die Achswelle aufweist. Erfindungsgemäßweist die Aufnahmestruktur zumindest einen Festlegungsbereich auf, der zur schwingungsdämpfenden Festlegung der Antriebseinheit an der Aufnahmestruktur zumindest ein Dämpfungselement aufweist.

Die vorliegende Erfindung löst die genannten Aufgaben ebenfalls mit einer Antriebseinrichtung für ein Fahrzeug, umfassend eine antreibbare Achse gemäß einem der Ansprüche 1-12 und eine Antriebseinheit, insbesondere einen Elektromotor, der mit der Aufnahmestruktur der antreibbaren Achse zum Antrieb des Fahrzeugs verbunden ist.

Einer der damit erzielten Vorteile ist, dass auf einfache und kostengünstige Weise ein Fahrzeugelement in Form eine Antriebseinheit direkt im Bereich bzw. mit der antreibbaren Achse angeordnet werden kann. Eine aufwändige Verbindung zwischen einer Antriebseinheit im Vorderwagen und der Starrachse im Heck eines Fahrzeugs wird damit vermieden. Dies spart nicht nur Kosten, sondern auch Bauraum. Darüber hinaus wird auch das Gewicht des Fahrzeugs insgesamt erheblich vermindert, was dessen Reichweite erhöht.

Weitere Merkmale, Vorteile und weitere Ausführungsformen der Erfindung sind im Folgenden beschrieben oder werden dadurch offenbar.

Gemäß einer vorteilhaften Weiterbildung ist die Aufnahmestruktur im Wesentlichen symmetrisch zu dem Achskörper angeordnet. Damit kann eine vorteilhafte Gewichtsverteilung an der antreibbaren Achse erreicht werden.

Gemäß einer weiteren vorteilhaften Weiterbildung ist die Aufnahmestruktur mit dem Achskörper form- und/oder stoffschlüssig verbunden, insbesondere verschweißt oder verpresst. Dies ermöglicht eine besonders zuverlässige und gleichzeitig einfache Festlegung von Aufnahmestruktur und Achskörper.

Erfindungsgemäß weist der Festlegungsbereich zumindest ein Dämpfungselement auf. Mittels des zumindest einen Dämpfungselements können unerwünschte Schwingungen gedämpft werden. So können beispielsweise Gummilager als Dämpfungselement verwendet werden, um eine unerwünschte Geräuschentwicklung zu vermeiden.

Gemäß einer weiteren vorteilhaften Weiterbildung ist ein Festlegungselement zur zusätzlichen formschlüssigen Verbindung von Aufnahmestruktur und Antriebseinheit zur Bereitstellung eines geschlossenen Kraftflusses von der Antriebseinheit zur Achswelle anordenbar. Damit wird ein besonders zuverlässiger Kraftfluss von der Antriebseinheit zur Achswelle zum Antrieb des Fahrzeugs ermöglicht.

Gemäß einerweiteren vorteilhaften Weiterbildung ist das Festlegungselement in Form eines insbesondere U-förmigen Bügels ausgebildet. Dies ermöglicht eine einfache und sichere Festlegung der Antriebseinheit in der Aufnahmestruktur und gleichzeitig einen zuverlässigen Kraftfluss von der Antriebseinheit zu einer Achswelle.

Einer weiteren vorteilhaften Weiterbildung ist das Festlegungselement lösbar mit der Aufnahmestruktur verbindbar. Damit ist eine einfache Anordnung des Festlegungselements möglich. So kann beispielsweise im Wartungsfall für die Antriebseinheit das Festlegungselement einfach entfernt werden, um die Antriebseinheit insgesamt entnehmen zu können.

Gemäß einer weiteren vorteilhaften Weiterbildung ist die Aufnahmestruktur im Wesentlichen wannenförmig ausgebildet. Die Wannen- oder U-Form ermöglicht neben einer einfachen Herstellung auch eine einfache Aufnahmemöglichkeit für die Antriebseinheit. Darüber hinaus kann die Aufnahmestruktur als dreiseitiger Käfig ausgebildet sein.

Gemäß einer weiteren vorteilhaften Weiterbildung umfasst die antreibbare Achse eine Federeinrichtung, insbesondere in Form von einer oder mehreren Blattfedern zur Federung des Fahrzeugs. Damit kann einfache Weise eine Federung für die antreibbare Achse bereitgestellt werden, die dann insbesondere als komplette Baugruppe in das Fahrzeug integriert werden kann.

Gemäß einer weiteren vorteilhaften Weiterbildung ist die Aufnahmestruktur zur Aufnahme eines Elektromotors ausgebildet. Damit kann der Elektromotor beispielsweise hinsichtlich seiner Energieversorgung, Kabelverläufen etc. auf besonders einfache Weise in der Aufnahmestruktur angeordnet und an dieser festgelegt werden.

Gemäß einer weiteren vorteilhaften Weiterbildung weist der Festlegungsbereich zumindest ein Verschraubungselement zur Verschraubung der Antriebseinheit mit der Aufnahmestruktur auf. Damit wird eine besonders einfache Weise eine lösbare Verbindung von Aufnahmestruktur und Antriebseinheit ermöglicht. Im Wartungsfall kann dann in kürzester Zeit die Antriebseinheit zur Reparatur oder dergleichen aus der Aufnahmestruktur entnommen und nach erfolgreicher Reparatur wieder eingesetzt und festgelegt werden.

Gemäß einer weiteren vorteilhaften Weiterbildung weist die Aufnahmestruktur zumindest ein Versteifungselement, insbesondere mehrere Versteifungsrippen auf. Damit lässt sich insgesamt Material und damit Gewicht einsparen bei gleichzeitig ausreichender Stabilität der Aufnahmestruktur zur Aufnahme der Antriebseinheit.

Gemäß einer weiteren vorteilhaften Weiterbildung verlaufen die Versteifungsrippen sowohl parallel zum Achskörper als auch senkrecht hierzu, insbesondere im Wesentlichen sternförmig. Damit wird eine besonders stabile Aufnahmestruktur bei gleichzeitig geringem Gewicht bereitgestellt. Die Versteifungsrippen können insbesondere konvex ausgebildet sein.

Weitere wichtige Merkmale und Vorteile der Erfindung ergeben sich aus den Unteransprüchen, aus den Zeichnungen, und aus dazugehöriger Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungen und Ausführungsformen der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile oder Elemente beziehen.

Dabei zeigt in schematischer Form
- Figur 1: eine antreibbare Achse mit einer Antriebseinheit gemäß einer Ausführungsform der vorliegenden Erfindung;
- Figur 2: die antreibbare Achse gemäß Figur 1 ohne Antriebseinheit;
- Figur 3: eine antreibbare Achse mit einer Antriebseinheit gemäß einer Ausführungsform der vorliegenden Erfindung;
- Figur 4: die antreibbare Achse gemäß Figur 3 ohne Antriebseinheit;

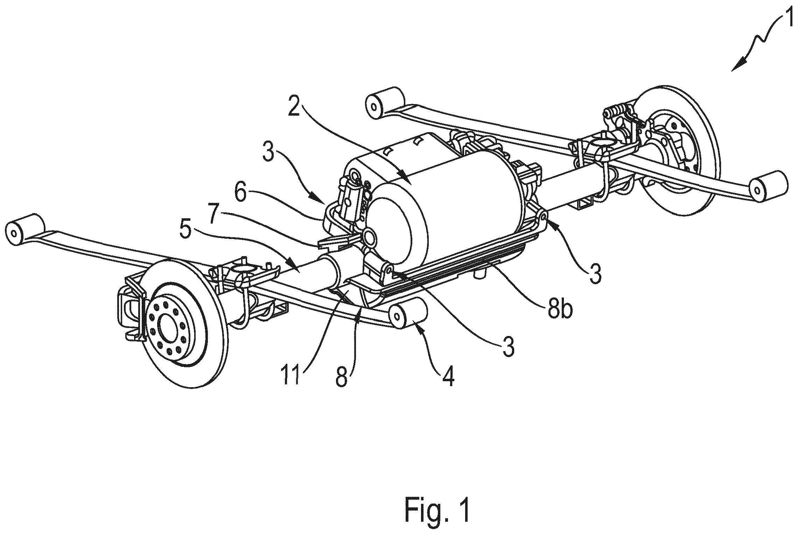

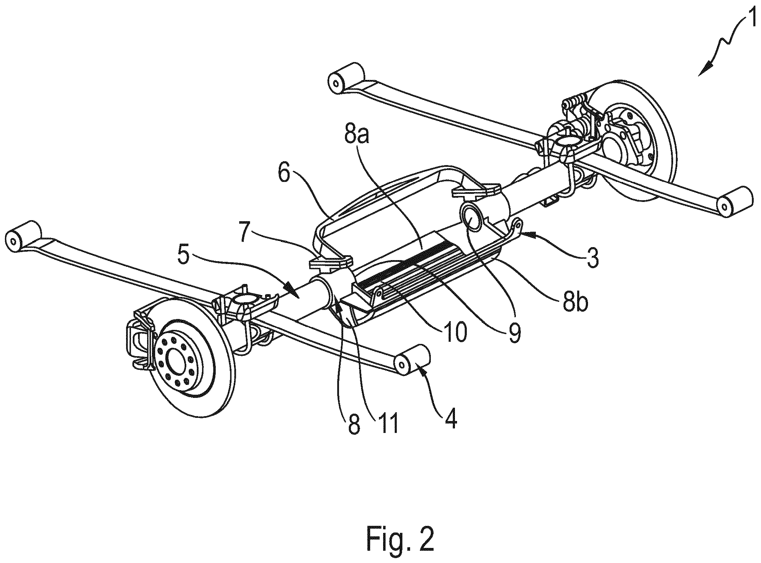

In Figur 1 ist eine antreibbare Achse mit einer Antriebseinheit gemäß einer Ausführungsform der vorliegenden Erfindung gezeigt und in Figur 2 ist die antreibbare Achse gemäß Figur 1 ohne die Antriebseinheit der Figur 1 gezeigt.

Im Detail in den Figuren 1 und 2 eine antreibbare Achse 1 in Form einer Starrachse gezeigt. Die antreibbare Achse 1 umfasst dabei einen zweigeteilten Achskörper 5, der als Hohlzylinder ausgebildet ist. In der Mitte des zweigeteilten Achskörpers 5 ist eine wannenförmige, tragend ausgebildete Aufnahmestruktur 8 angeordnet, die zur Aufnahme eines Elektromotors 2 dient. Der Elektromotor 2 ist über Verschraubungsbereiche 3 mit der Aufnahmestruktur 8 verbunden. Weiter ist ein u-förmiger, gegenüber der Aufnahmestruktur 8 gekippter u-förmiger Bügel 6 angeordnet, der nach der Festlegung des Elektromotors 2 in der Aufnahmestruktur 8 mit der Aufnahmestruktur 8 mittels einer Verschraubung 7 ebenfalls festgelegt wird und zusätzlich den Elektromotor 2 sichert. Anhand des Bügels 6 kann zum einen ein geschlossener Kraftfluss vom Elektromotor 2 zu einer Achswelle im Achskörper 5 und ein maximales Widerstandsmoment gewährleistet werden. Zur Geräuschdämpfung können an den Verschraubungsbereichen 3 Dämpfungselemente 10 angeordnet werden, beispielsweise Gummielemente.

Die Aufnahmestruktur 8 umfasst weiter auf ihrer Außenseite Versteifungsrippen 11, die im Bereich des Übergangs zwischen Achskörper 5 und Aufnahmestruktur 8 sternförmig, also radial nach außen verlaufen, und die im Bereich der Erstreckung der Aufnahmestruktur 8 parallel zur Erstreckungsrichtung des Achskörper 5 ebenfalls parallel zu dieser verlaufen. Die Aufnahmestruktur 8 selbst weist in ihrem Inneren an den jeweiligen Stirnseiten, d. h. an den Seiten, an denen die Aufnahmestruktur 8 mit dem Achskörper 5 verbunden ist, Öffnungen 9 auf, die zu Öffnungen des Achskörpers 5 korrespondieren. Durch diese wird beispielsweise eine Verbindung von Elektromotor 2 und einer in dem Achskörper 5 angeordneten Achswelle zum Antrieb des Fahrzeugs ermöglicht.

Weiterhin weist die antreibbare Achse 1 Blattfedern 4 auf, die senkrecht zur Erstreckungsrichtung des Achskörpers 5 angeordnet sind. Diese werden dann mit dem Fahrzeugaufbau verbunden. Alternativ ist auch eine Mehrlenkerführung der antreibbaren Achse 1 möglich. Ebenfalls kann die antreibbare Achse 1 mit einem Panhardstab und einem Längslenker versehen werden.

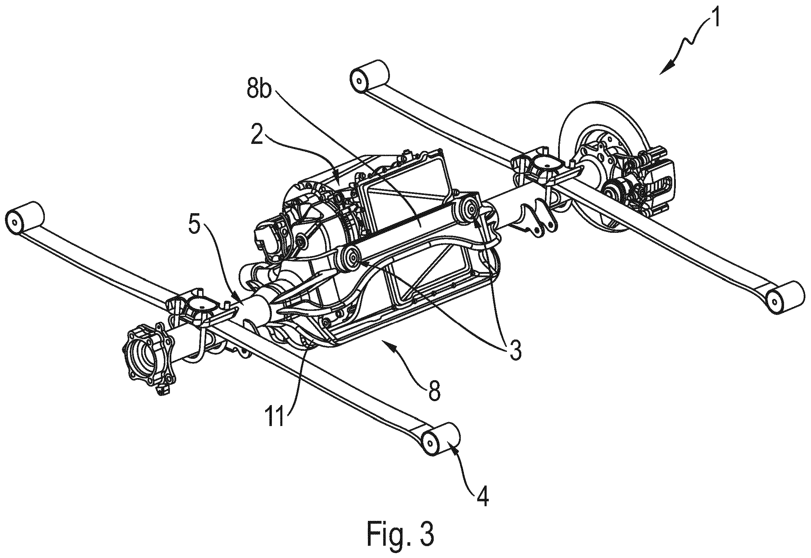

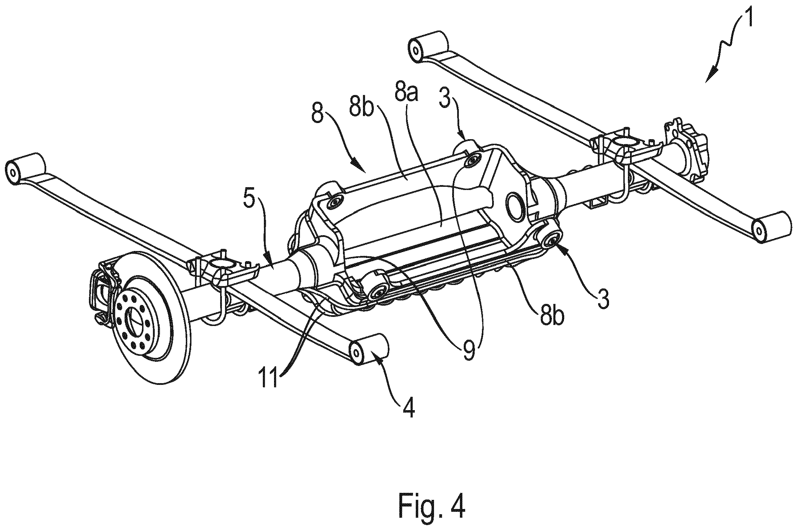

In Figur 3 ist eine antreibbare Achse mit einer Antriebseinheit gemäß einer Ausführungsform der vorliegenden Erfindung gezeigt und in Figur 4 ist die antreibbare Achse gemäß Figur 3 ohne die Antriebseinheit der Figur 3 gezeigt.

Im Detail ist in den Figuren 3 und 4 im Wesentlichen eine antreibbare Achse 1 gemäß Fig. 1 und 2 gezeigt. Ebenso wie die antreibbare Achse 1 gemäß Fig. 1 und 2 weist die antreibbare Achse 1 gemäß Fig. 3 und 4 eine Aufnahmestruktur 8 mit einem im Wesentlichen flachen Bodenbereich 8a auf. Anstelle des lösbar angeordneten Bügels 6 sind nun zusätzlich zur bereits vorhandenen Seitenwand, eine weitere Seitenwand angeordnet; mithin weist die Aufnahmestruktur 8 gemäß Fig. 3 und 4 nun zwei Seitenwände 8b auf, die sich parallel zur Achse des Achskörpers 5 erstrecken. Dabei sind diese in ihrer Erstreckung senkrecht zum Achskörper 5 länger bzw. höher als die Seitenwand der antreibbaren Achse 1 gemäß Fig. 1 und 2 ausgebildet. Mit anderen Worten wird bei der Ausführungsform der Fig. 3 und 4 ein Elektromotor 2 "tiefer" in der Aufnahmestruktur 8 angeordnet, was eine noch zuverlässigere Festlegung desselben ermöglicht. Insbesondere sind die Seitenwände 8b so ausgebildet, dass der Elektromotor 2 in seiner Erstreckung senkrecht zum Achskörper 5 zumindest zur Hälfte von der Aufnahmestruktur 8 im Wesentlichen umgeben ist. Die Seitenwände 8b werden hier durch Streben gebildet bzw. durch große, sich über die gesamte axiale Länge erstreckenden Öffnungen in den beiden Seitenwänden 8b. Dies ermöglicht Material und damit Kosten einzusparen. Insoweit bildet die Aufnahmestruktur 8 der Fig. 3 und 4 einen dreiseitigen Käfig.

Insgesamt ist die Aufnahmestruktur 8 der Fig. 3 und 4 einstückig ausgebildet. Wie auch in den Fig. 1 und 2 weist die Aufnahmestruktur 8 Versteifungsrippen 11 auf, welche konvex ausgebildet sind. Ebenso kann die Aufnahmestruktur 8 vorzugsweise in ihren vier, symmetrisch an der Aufnahmestruktur 8 angeordneten Verschraubungsbereichen 3 mit Dämpfungselementen, insbesondere in Form von weichen und/oder harten Gummilagern, versehen werden.

Zusammenfassend weist zumindest eine der Ausführungsformen der Erfindung zumindest einen der folgenden Vorteile auf:
- Einfache Implementierung.
- Kostengünstige Implementierung.
- Kleiner Bauraum.
- Geringes Gewicht.
- Reduzierte Geräuschentwicklung.

Obwohl die vorliegende Erfindung anhand bevorzugter Ausführungsbeispiele beschrieben wurde, ist sie nicht darauf beschränkt, sondern auf vielfältige Weise modifizierbar.

### Bezugszeichen

- 1: Antreibbare Achse
- 2: Antriebseinheit
- 3: Festlegungsbereich
- 4: Blattfeder
- 5: Achskörper
- 6: Festlegungselement
- 7: Verschraubung
- 8: Aufnahmestruktur
- 8a: Bodenbereich
- 8b: Seitenwand
- 9: Öffnungen
- 10: Dämpfungselement
- 11: Versteifungselement

## Patentansprüche

1. Antreibbare Achse (1) für ein Fahrzeug, insbesondere eine Starrachse, umfassend
einen Achskörper (5), ausgebildet zur Aufnahme einer Achswelle und
eine Aufnahmestruktur (8) zur Aufnahme eines Fahrzeugelements (2) zur Einbindung in einen Antriebsstrang, wobei die Aufnahmestruktur (8) mit dem Achskörper (5) verbunden ist, wobei die Aufnahmestruktur (8) zur Aufnahme einer Antriebseinheit (2) des Fahrzeugs ausgebildet ist und Öffnungen (9) zum Anschluss an die Achswelle aufweist,
**dadurch gekennzeichnet, dass** die Aufnahmestruktur (8) zumindest einen Festlegungsbereich (3) aufweist, der zur schwingungsdämpfenden Festlegung der Antriebseinheit (2) an der Aufnahmestruktur (8) zumindest ein Dämpfungselement (10) aufweist.

2. Antreibbare Achse gemäß Anspruch 1, **dadurch gekennzeichnet, dass** die Aufnahmestruktur (8) im Wesentlichen symmetrisch zu dem Achskörper (5) angeordnet ist.

3. Antreibbare Achse gemäß einem der Ansprüche 1-2, **dadurch gekennzeichnet, dass** die Aufnahmestruktur (8) mit dem Achskörper (5) form- und/oder kraftschlüssig verbunden ist, insbesondere verschweißt oder verpresst ist.

4. Antreibbare Achse gemäß einem der Ansprüche 1-3, **dadurch gekennzeichnet, dass** ein Festlegungselement (6) zur zusätzlichen formschlüssigen Verbindung von Aufnahmestruktur (8) und Antriebseinheit (2) zur Bereitstellung eines geschlossenen Kraftflusses von der Antriebseinheit (2) zur Achswelle anordenbar ist.

5. Antreibbare Achse gemäß Anspruch 4, **dadurch gekennzeichnet, dass** das Festlegungselement (6) in Form eines insbesondere u-förmigen Bügels ausgebildet ist.

6. Antreibbare Achse gemäß Anspruch 4 oder 5 , **dadurch gekennzeichnet, dass** das Festlegungselement (6) lösbar mit der Aufnahmestruktur (8) verbindbar ist.

7. Antreibbare Achse gemäß einem der Ansprüche 1-6, **dadurch gekennzeichnet, dass** die Aufnahmestruktur (8) im Wesentlichen wannenförmig ausgebildet ist.

8. Antreibbare Achse gemäß einem der Ansprüche 1-7, **dadurch gekennzeichnet, dass** die antreibbare Achse (1) eine Federeinrichtung (4) umfasst, insbesondere in Form einer oder mehrerer Blattfedern, zur Federung des Fahrzeugs.

9. Antreibbare Achse gemäß einem der Ansprüche 1-8, **dadurch gekennzeichnet, dass** die Aufnahmestruktur (8) zur Aufnahme eines Elektromotors (2) ausgebildet ist.

10. Antreibbare Achse gemäß einem der Ansprüche 1-9, **dadurch gekennzeichnet, dass** der Festlegungsbereich (3) zumindest ein Verschraubungselement (7) zur Verschraubung der Antriebseinheit (2) mit der Aufnahmestruktur (8) aufweist.

11. Antreibbare Achse gemäß einem der Ansprüche 1-10, **dadurch gekennzeichnet, dass** die Aufnahmestruktur (8) zumindest ein Versteifungselement (11), insbesondere mehrere Versteifungsrippen, aufweist.

12. Antreibbare Achse gemäß Anspruch 11, **dadurch gekennzeichnet, dass** die Versteifungsrippen (11) sowohl parallel zum Achskörper (4) als auch senkrecht hierzu, insbesondere im Wesentlichen sternförmig, verlaufen.

13. Antriebseinrichtung für ein Fahrzeug,
umfassend
eine antreibbare Achse (1) gemäß einem der Ansprüche 1-12, und
eine Antriebseinheit (2), insbesondere einen Elektromotor, der mit der Aufnahmestruktur (8) der antreibbaren Achse (1) zum Antrieb des Fahrzeugs verbunden ist.

## Claims

1. Drivable axle (1) for a vehicle, in particular a rigid axle, comprising
an axle beam (5), configured for receiving an axle shaft, and
a receiving structure (8) for receiving a vehicle element (2) for incorporation into a drive train, the receiving structure (8) being connected to the axle beam (5), the receiving structure (8) being configured to receive a drive unit (2) of the vehicle and having openings (9) for connection to the axle shaft,
**characterized in that** the receiving structure (8) has at least one fixing region (3) which has at least one damping element (10) for fixing the drive unit (2) in a vibration-damping manner on the receiving structure (8).

2. Drivable axle according to Claim 1, **characterized in that** the receiving structure (8) is arranged substantially symmetrically with respect to the axle beam (5) .

3. Drivable axle according to either of Claims 1-2, **characterized in that** the receiving structure (8) is connected to the axle beam (5) in a positively locking and/or non-positive manner, in particular is welded or pressed.

4. Drivable axle according to one of Claims 1-3, **characterized in that** a fixing element (6) can be arranged for the additional positively locking connection of the receiving structure (8) and the drive unit (2) in order to provide a closed force flow from the drive unit (2) to the axle shaft.

5. Drivable axle according to Claim 4, **characterized in that** the fixing element (6) is configured in the form of an, in particular, U-shaped bracket.

6. Drivable axle according to Claim 4 or 5, **characterized in that** the fixing element (6) can be connected releasably to the receiving structure (8).

7. Drivable axle according to one of Claims 1-6, **characterized in that** the receiving structure (8) is of substantially tub-shaped configuration.

8. Drivable axle according to one of Claims 1-7, **characterized in that** the drivable axle (1) comprises a spring device (4), in particular in the form of one or more leaf springs, for the suspension of the vehicle.

9. Drivable axle according to one of Claims 1-8, **characterized in that** the receiving structure (8) is configured to receive an electric motor (2).

10. Drivable axle according to one of Claims 1-9, **characterized in that** the fixing region (3) has at least one screwing element (7) for screwing the drive unit (2) to the receiving structure (8).

11. Drivable axle according to one of Claims 1-10, **characterized in that** the receiving structure (8) has at least one reinforcing element (11), in particular a plurality of reinforcing ribs.

12. Drivable axle according to Claim 11, **characterized in that** the reinforcing ribs (11) run both parallel to the axle beam (4) and perpendicularly with respect thereto, in particular in a substantially star-shaped manner.

13. Drive device for a vehicle,
comprising
a drivable axle (1) according to one of Claims 1-12, and a drive unit (2), in particular an electric motor which is connected to the receiving structure (8) of the drivable axle (1) for driving the vehicle.

## Revendications

1. Essieu entraînable (1) pour un véhicule, notamment essieu rigide, comprenant :
un corps d'essieu (5), configuré pour recevoir un arbre d'essieu et
une structure de réception (8) pour recevoir un élément de véhicule (2) pour l'intégration dans une chaîne cinématique, la structure de réception (8) étant reliée au corps d'essieu (5), la structure de réception (8) étant configurée pour recevoir une unité d'entraînement (2) du véhicule et présentant des ouvertures (9) pour le raccordement à l'arbre d'essieu,
**caractérisé en ce que** la structure de réception (8) présente au moins une zone de fixation (3), qui présente au moins un élément d'amortissement (10) pour fixer l'unité d'entraînement (2) à la structure de réception (8) en amortissant les vibrations.

2. Essieu entraînable selon la revendication 1, **caractérisé en ce que** la structure de réception (8) est agencée de manière essentiellement symétrique par rapport au corps d'essieu (5).

3. Essieu entraînable selon l'une quelconque des revendications 1 à 2, **caractérisé en ce que** la structure de réception (8) est reliée au corps d'essieu (5) par complémentarité de forme et/ou par force, notamment est soudée ou assemblée par pression.

4. Essieu entraînable selon l'une quelconque des revendications 1 à 3, **caractérisé en ce qu'**un élément de fixation (6) peut être agencé pour la liaison supplémentaire par complémentarité de forme de la structure de réception (8) et de l'unité d'entraînement (2) afin de fournir un flux de force fermé de l'unité d'entraînement (2) à l'arbre d'essieu.

5. Essieu entraînable selon la revendication 4, **caractérisé en ce que** l'élément de fixation (6) est configuré sous la forme d'un étrier, notamment en forme de U.

6. Essieu entraînable selon la revendication 4 ou 5, **caractérisé en ce que** l'élément de fixation (6) peut être relié de manière amovible à la structure de réception (8).

7. Essieu entraînable selon l'une quelconque des revendications 1 à 6, **caractérisé en ce que** la structure de réception (8) est configurée essentiellement sous forme de cuve.

8. Essieu entraînable selon l'une quelconque des revendications 1 à 7, **caractérisé en ce que** l'essieu entraînable (1) comprend un dispositif de ressort (4), notamment sous la forme d'un ou plusieurs ressorts à lames, pour la suspension du véhicule.

9. Essieu entraînable selon l'une quelconque des revendications 1 à 8, **caractérisé en ce que** la structure de réception (8) est configurée pour recevoir un moteur électrique (2).

10. Essieu entraînable selon l'une quelconque des revendications 1 à 9, **caractérisé en ce que** la zone de fixation (3) présente au moins un élément de vissage (7) pour visser l'unité d'entraînement (2) avec la structure de réception (8).

11. Essieu entraînable selon l'une quelconque des revendications 1 à 10, **caractérisé en ce que** la structure de réception (8) présente au moins un élément de renforcement (11), notamment plusieurs nervures de renforcement.

12. Essieu entraînable selon la revendication 11, **caractérisé en ce que** les nervures de renforcement (11) s'étendent aussi bien parallèlement au corps d'essieu (4) que perpendiculairement à celui-ci, notamment essentiellement en forme d'étoile.

13. Dispositif d'entraînement pour un véhicule, comprenant :
un essieu entraînable (1) selon l'une quelconque des revendications 1 à 12, et
une unité d'entraînement (2), notamment un moteur électrique, qui est relié à la structure de réception (8) de l'essieu entraînable (1) pour entraîner le véhicule.
